Europäisches Patentamt

European Patent Office

Office européen des brevets

(19)

(11) Veröffentlichungsnummer : **0 142 697
B1**

(12) **EUROPÄISCHE PATENTSCHRIFT**

(45) Veröffentlichungstag der Patentschrift :
21.01.87

(21) Anmeldenummer : 84112270.8

(22) Anmeldetag : 12.10.84

(51) Int. Cl.⁴ : **B 64 C   1/12**

(54) Gekrümmtes Flächenbauteil, insbesondere für Luftfahrzeuge und Vorrichtung zu dessen Herstellung.

(30) Priorität : 17.11.83 DE 3341564

(43) Veröffentlichungstag der Anmeldung :
29.05.85 Patentblatt 85/22

(45) Bekanntmachung des Hinweises auf die Patenterteilung : 21.01.87 Patentblatt 87/04

(84) Benannte Vertragsstaaten :
DE FR GB IT NL

(56) Entgegenhaltungen :
DE-A- 3 003 552
FR-A- 1 345 076
US-A- 3 058 704
US-A- 3 976 269

(73) Patentinhaber : **Messerschmitt-Bölkow-Blohm Gesellschaft mit beschränkter Haftung
Robert-Koch-Strasse
D-8012 Ottobrunn (DE)**

(72) Erfinder : **Sarh, Branko
150 Robbins Rd
02172 Watertown Boston (US)**

## Beschreibung

Die Erfindung bezieht sich auf ein gekrümmtes Flächenbauteil, insbesondere für Luftfahrzeuge nach dem Oberbegriff des Anspruchs 1 sowie auf eine Vorrichtung zu dessen Herstellung nach dem Oberbegriff des Anspruchs 7.

Durch derartige Bauteile werden statisch gleichwertige Blechkonstruktionen ersetzt, wodurch eine erhebliche Reduzierung des Baugewichts erzielbar ist. Durch geeignete Gestaltung und Fertigung dieser Teile besteht weiterhin die Möglichkeit, deren Fertigungskosten dadurch wesentlich zu senken, daß möglichst alle Elemente eines Bauteils bei möglichst großen Abmessungen in einem einzigen Heiß-Press-Vorgang ausgehärtet und miteinander verbunden werden.

Ein derartiges Bauteil ist durch die DE-A-30 03-552 bekannt. Dieses Teil besteht im wesentlichen aus einer Außenhaut und einem inneren Gitter zu deren Versteifung. Zu seiner Herstellung wird die Außenhaut innerhalb einer Klebevorrichtung aus mit Kunststoff imprägniertem Fasergewebe (Prepreg) laminiert. Das Gitter wird in einer weiteren Vorrichtung dadurch gebildet, daß quaderförmige Formkörper auf ihren Seitenflächen mit Prepreg-Bändern bandagiert und mittels eines zweidimensionalen, aus Quer- und Längsträgern bestehenden Gerüstes in Quer- und Längsrichtung zusammengepreßt werden. Anschließend wird das Gerüst mit dem Gitter auf eine in der Klebevorrichtung befindliche Außenhaut abgesenkt und das Ganze in einem Heiß-Preß-Vorgang ausgehärtet.

Die derart hergestellten Bauteile sind je nach Formgebung als Fußbodenelemente oder als Tragflügel bzw. Leitwerksschalen verwendbar. Dabei ergibt sich die bei besagten Schalen übliche Krümmung aus dem Strak der betreffenden Bauteile und wird durch eine entsprechende Gestaltung der Formkörper erreicht.

Diese Lösung weist jedoch den Nachteil auf, daß sie zur Herstellung von Flugzeugrümpfen nicht anwendbar ist.

Demgemäß liegt der Erfindung die Aufgabe zugrunde, ein Flächenbauteil der eingangs genannten Art so auszubilden, daß es zum Aufbau von Flugzeugrümpfen geeignet ist und eine Vorrichtung zu dessen Herstellung anzugeben, wobei möglichst alle Elemente des Bauteils in einem Heiß-Press-Vorgang ausgehärtet und miteinander verbunden werden.

Diese Aufgabe wird bei einem gattungsgemäßen Bauteil durch die kennzeichnenden Merkmale des Anspruchs 1 gelöst. Vorteilhafte Weiterbildungen der Erfindung sind in den Unteransprüchen 2 bis 6 angegeben. Eine Vorrichtung zur Herstellung des Flächenbauteils ist Anspruch 7 sowie den hierauf bezogenen Unteransprüchen zu entnehmen.

Mit den Maßnahmen nach der Erfindung wird bei der Herstellung des vorgenannten Bauteiles eine Folge von weitgehend automatisierbaren Fertigungsschritten erreicht, wobei der Zusammenbau des gesamten Bauteils aus vorwiegend nicht ausgehärteten Prepreg-Lagen in einem Heiß-Press-Vorgang erfolgt. In einer bevorzugten Ausgestaltung weist das Bauteil eine nahtlose zylinder- oder kegelähnliche Form auf.

Die Erfindung ist anhand eines Beispiels in der Zeichnung dargestellt und in der Beschreibung näher erläutert. Es zeigen :

Figur 1a einen Formkörper zur Herstellung eines Kastenrahmens ;

Figur 1b die Einzelteile des Formkörpers nach Fig. 1a,

Figur 2 einen Querschnitt durch eine Bauvorrichtung mit Formkörpern nach Fig. 1a und 1b,

Figur 3 einen Längsschnitt durch die Bauvorrichtung nach Fig. 2,

Figur 4 eine Teilansicht einer Bauvorrichtung,

Figur 5 eine Gesamtansicht einer Bauvorrichtung und

Figur 6 eine Teilansicht eines fertigen, teilweise entformten Bauteils.

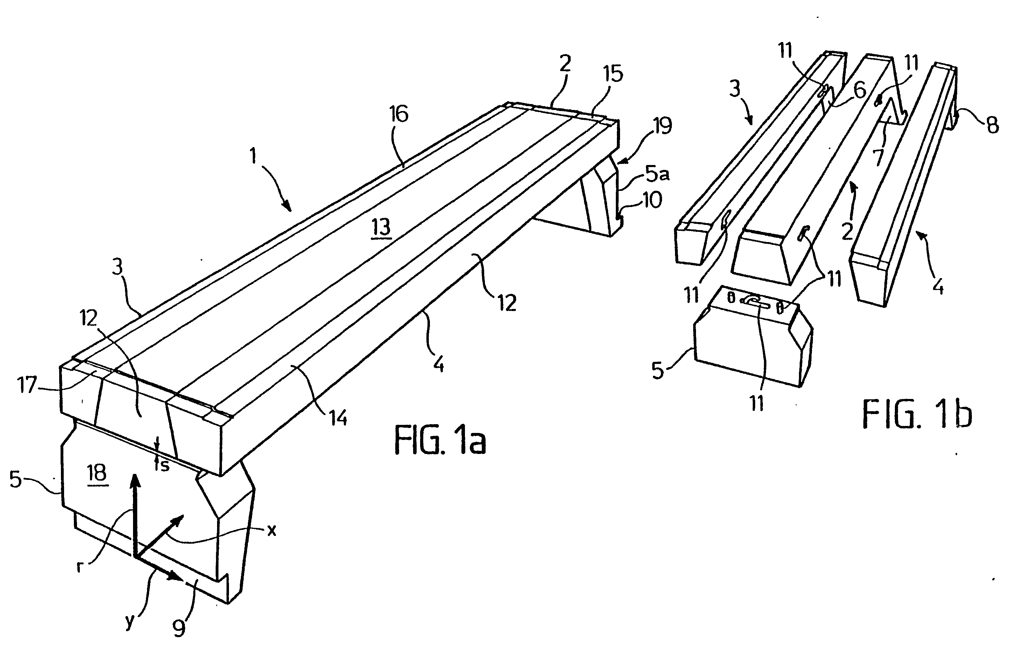

Die Figuren 1a und 1b zeigen einen Formkörper 1, der während des Aushärtens des Bauteils zusammen mit einer Vielzahl ähnlicher Körper zum Formen der Außenhaut und des Versteifungsgitters dient. Dabei ist der Formkörper gemäß Fig. 1 entsprechend den gezeigten Pfeilen x, y und r orientiert, die die Längs-, Umfangs- und Radialrichtung z. B. in einem zylindrischen Rumpfabschnitt angeben. Der Formkörper 1 besteht im wesentlichen aus einem annähernd quaderförmigen Grundkörper, der in ein Mittelteil 2 und zwei Seitenteile 3 und 4 längs geteilt ist. An den Enden des Grundkörpers ist je eine sich radial nach innen erstreckende Spantstütze 5 bzw. 5a vorgesehen.

Fig. 1b zeigt den Formkörper 1 in zerlegtem Zustand mit dem Mittelteil 2 und den beiden Seitenteilen 3 und 4, an deren im Bild rückwärtigem Ende jeweils ein radial nach innen weisender Ansatz 6, 7 und 8 einstückig angeformt ist, die gemeinsam die Spantstütze 5a bilden. Die Spantstütze 5 ist dagegen als ein zusammenhängendes lösbares Teil ausgeführt und weist am radial inneren Rand der dem Formkörper abgewandten Fläche eine Aussparung 9 auf. Dementsprechend ist der betreffende Rand der Spantstütze 5a mit einem Anschlag 10 versehen. Die vorgenannten Teile des Formkörpers 1 sind durch geeignete lösbare Verbindungselemente 11 beliebiger Art miteinander verbunden.

Aufgrund der hierdurch erreichten Zerlegbarkeit wird das Entformen des Bauteils erleichtert. Das Entformen wird weiterhin dadurch erleichtert, daß die beiden längs verlaufenden Schnittebenen, wodurch der Grundkörper mit der Spantstütze 5a in das Mittelteil 7 und die beiden Seitenteile 3 und 4 geteilt ist, nach außen konvergieren. Die Stirnfläche und die Seitenfläche des Grundkörpers bilden mit den entsprechenden, hier nicht sichtbaren Flächen eine umlaufende Rahmenfläche 12. Die Deckfläche 13 setzt sich aus den Deckflächen der Teile 2, 3 und 4 zusammen und ist entsprechend der Form des Rumpfes gekrümmt. Die Fläche 13 ist umgeben von vertieft angeordneten Flächenstreifen 14, 15, 16 und 17. Entsprechende vertieft angeordnete Flächenstreifen sind auch an den hier nicht sichtbaren unteren Längskanten des Grundkörpers angeordnet. Die in Längsrichtung äußeren Flächen 18 und 19 der Spantstützen 5 und 5a sind gegenüber den betreffenden Bereichen der Rahmenfläche 12 um ein Maß s hervorgehoben. Zur Bildung eines Rahmens wird die umlaufende Rahmenfläche 12 des betreffenden Formkörpers 1 je nach Rumpfkonstruktion zur Bildung von Stringer- und Spantenelementen 21 und 59 mit mindestens einem Prepreg-Streifen bandagiert. Die Breite des Bandes ist dabei derart bemessen, daß überstehende Bereiche des Bandes auf die vertieften Flächenstreifen 14, 15, 16 und 17 sowie auf an der Unterseite des Formkörpers nur in Längsrichtung verlaufende entsprechende Flächenstreifen umgelegt werden können. Damit sind die seitlichen Bereiche des Formkörpers 1 vom Bandmaterial U-förmig umschlossen.

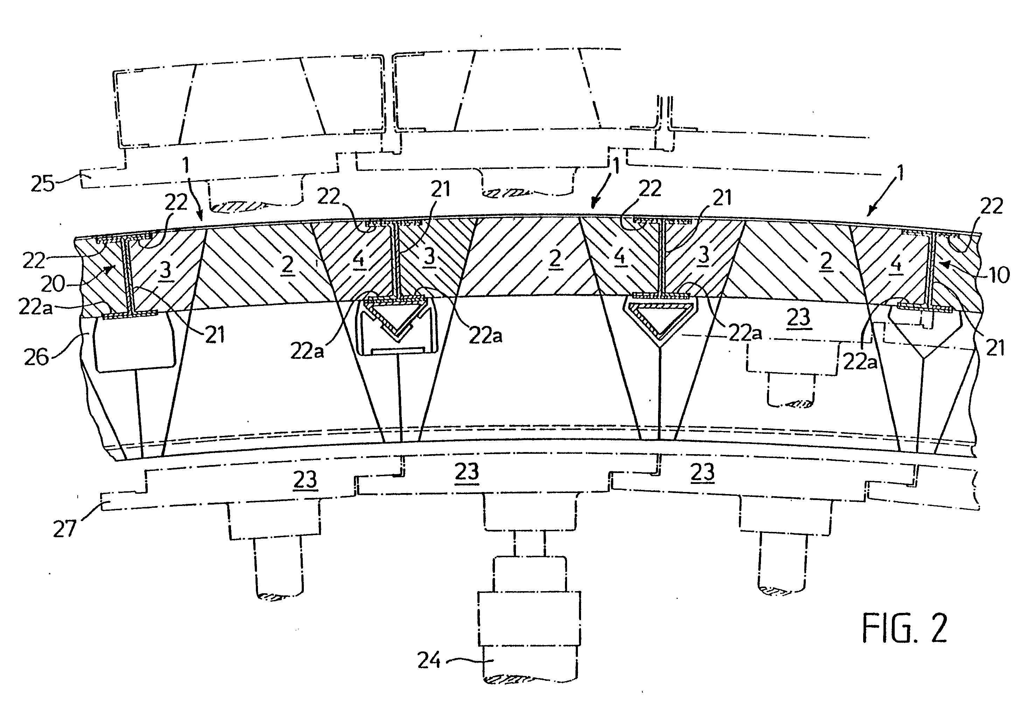

Fig. 2 zeigt einen Teilquerschnitt durch eine Vorrichtung zur Herstellung eines Flugzeugrumpfes mit drei benachbarten Formkörpern 1. Gemäß der vorgesehenen Stringerteilung sind insgesamt sechsundneunzig Formkörper 1 auf dem Umfang des Querschnitts angeordnet. Die Mittelteile 2 und die Seitenteile 3 und 4 erscheinen hier im Schnitt. Jeweils im Bereich zweier benachbarter Seitenteile 3 und 4 wird aus den U-förmig eingebrachten Bändern ein im Querschnitt I-förmiger Stringer 20 mit einem Steg 21 sowie zwei Gurten 22 und 22a geformt. Die Unterseiten der oberen Gurte 22 werden durch die längs verlaufenden vertieft angeordneten Flächenstreifen 14 und 16 gemäß Fig. 1 bestimmt. Die Oberseiten der unteren Gurte 22a ergeben sich entsprechend durch die an den betreffenden Stellen der Formkörper 1 vertieft angeordneten Flächenstreifen. Die Formkörper 1 sind durch hier nicht gezeigte Verbindungseinrichtungen beliebiger Art an Trägerplatten 23 befestigt, die jeweils durch einen Hydraulikzylinder 24 radial verfahrbar sind und damit in die gezeigte Formposition 26, in eine Rüstposition 25 und in eine Ausfahrposition 27 gebracht werden können. Anstelle der Zylinder 24 sind auch andere Radialantriebe denkbar.

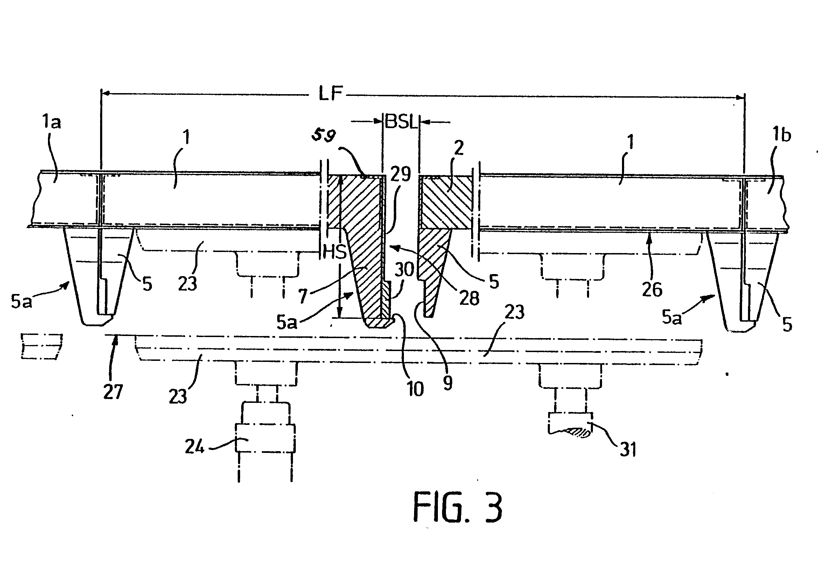

Fig. 3 zeigt eine Seitenansicht eines Formkörpers 1 nach Fig. 2. Dieser Körper 1 hat die Länge LF und ist zusammen mit zwei weiteren, jedoch nur teilweise gezeigten Formkörpern 1a und 1b in der Formposition 26 dargestellt. In der hier nicht gesondert erscheinenden Rüstposition der Trägerplatten 23 klafft zwischen zwei axial benachbarten Formkörpern 1 jeweils ein Spalt vor der Breite BSL, gemäß dem eingeschobenen Schnitt mit dem Mittelteil 2, der abnehmbaren Spantstütze 5 und dem angeformten Ansatz 7. In dieser Position wird ein aus Prepreg vorgefertigtes Spantsegment 28, bestehend aus einem Steg 29 und einem Gurt 30 eingesetzt. Dabei werden jeweils zwei in Umfangsrichtung benachbarte Segment-Enden durch eine 1,5°-Schäftung miteinander verbunden. In der Formposition 26 sind die Formkörper 1, 1a 1b usw. in axialer Richtung auf vorbestimmte Positionen gebracht. Das Spantsegment 28 wird dabei allseitig abgestützt, was jeweils durch die Spantstützen 5 und 5a mit den Aussparungen 9 und den Anschlägen 10 geschieht. Je Trägerplatte 23 ist außer dem Hydraulikzylinder 24 eine Radialführung 31 vorgesehen.

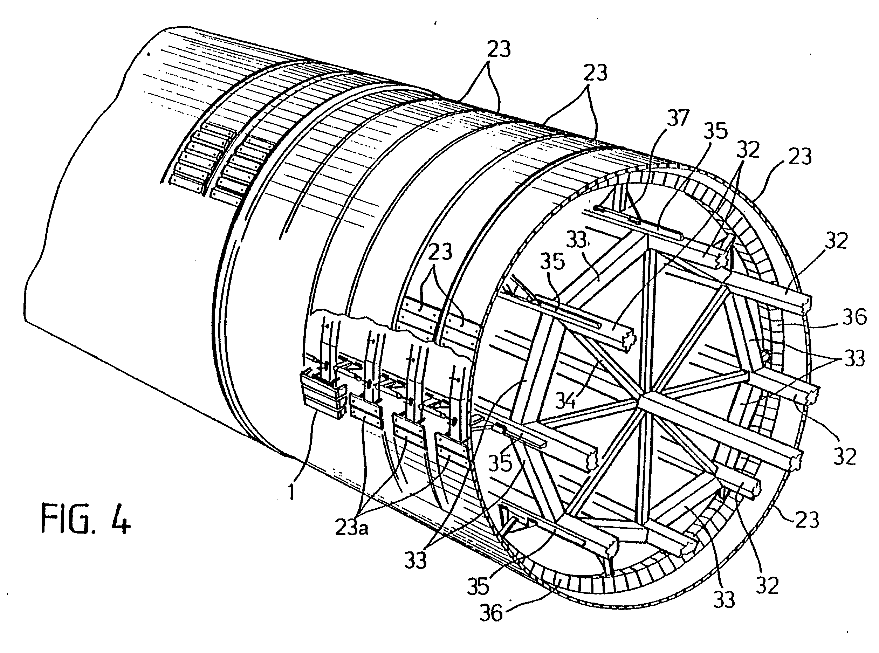

Fig. 4 zeigt im Prinzip die innere Tragkonstruktion der gesamten Bauvorrichtung. Diese ist aus Vierkantrohren aufgebaut und besteht im wesentlichen aus einem als räumliches Fachwerk ausgebildeten Dorn 32 mit acht Längsträgern 32a und einer Vielzahl damit verbundener Aussteifungen 33, die an vorbestimmten Stellen jeweils ein Achteck bilden. Jedes Achteck ist seinerseits durch eine sternförmige Innenkonstruktion 34 abgestützt. Jeder Träger 32a ist an seiner radial äußeren Fläche mit einer Längsschiene 35 versehen. Die Vorrichtung weist weiterhin eine Vielzahl von Tragringen 36 auf. Auf der Innenseite eines jeden Ringes 36 sind mit diesem acht Stützen 37 fest verbunden, die durch die Schienen 35 in Längsrichtung formschlüssig geführt sind. Damit ist jeder Tragring 36 auf dem Dorn 32 in Längsrichtung verfahrbar. Da der Dorn 32 entsprechend der Form des Bauteils im allgemeinen an einem Ende einen großen, am anderen Ende jedoch einen kleinen Durchmesser aufweist, ist der Dorn 32 evtl. in mehrere Bereiche mit unterschiedlichem radialem Abstand der Träger 32a unterteilt. Die Ringe 36 sind dann nur innerhalb des jeweils zugeordneten Bereiches in Längsrichtung verfahrbar. Auf jedem Tragring 36 sind die Zylinder 24 und die Führungen 31 radial in zwei Querschnittsebenen montiert. Dabei sind die Zylinder 24 und die Führungen 31 in Umfangsrichtung abwechselnd angeordnet. Aufgrund der angegebenen Stringerteilung entfallen auf jede Montageebene achtundvierzig Zylinder und ebensoviele Führungen 31 und die Achsen von jeweils zwei benachbarten dieser Elemente bilden somit einen Winkel von 3°45'. Je Trägerplatte 23 ist ein Zylinder 24 und eine Führung 31 vorgesehen. Die Zylinder 24 und Führungen 31 beider Ebenen sind daher um 3°45' versetzt. Auch in Längsrichtung sind die Zylinder 24 und Führungen 31 in abwechselnder Folge angeordnet. Hierdurch kann die Hälfte der sonst erforderlichen Zylinder 24 durch die einfacheren Führungen ersetzt werden.

Gemäß Fig. 2 weisen die Trägerplatten 23 einen z-förmigen Querschnitt auf. Hierdurch wird eine Überlappung der Plattenränder erreicht, so daß der jeweils nicht durch einen Zylinder angetriebene Teil einer Trägerplatte 23 durch einen in Umfangsrichtung benachbarten Zylinder 24 bewegt wird. Durch Betätigen der Zylinder 24 können die Trägerplatten 23 jeweils in die Rüst-, Form- und Ausfahrposition gebracht werden. Dabei wird die erforderliche Reproduzierbarkeit der einzelnen Positionen insbesondere der Formposition durch einstellbare Endschalter und Anschläge sichergestellt. Fig. 4 zeigt weiterhin die Trägerplatten 23 in der Formposition sowie einige Platten 23a und Formkörper 1 in der Rüstposition.

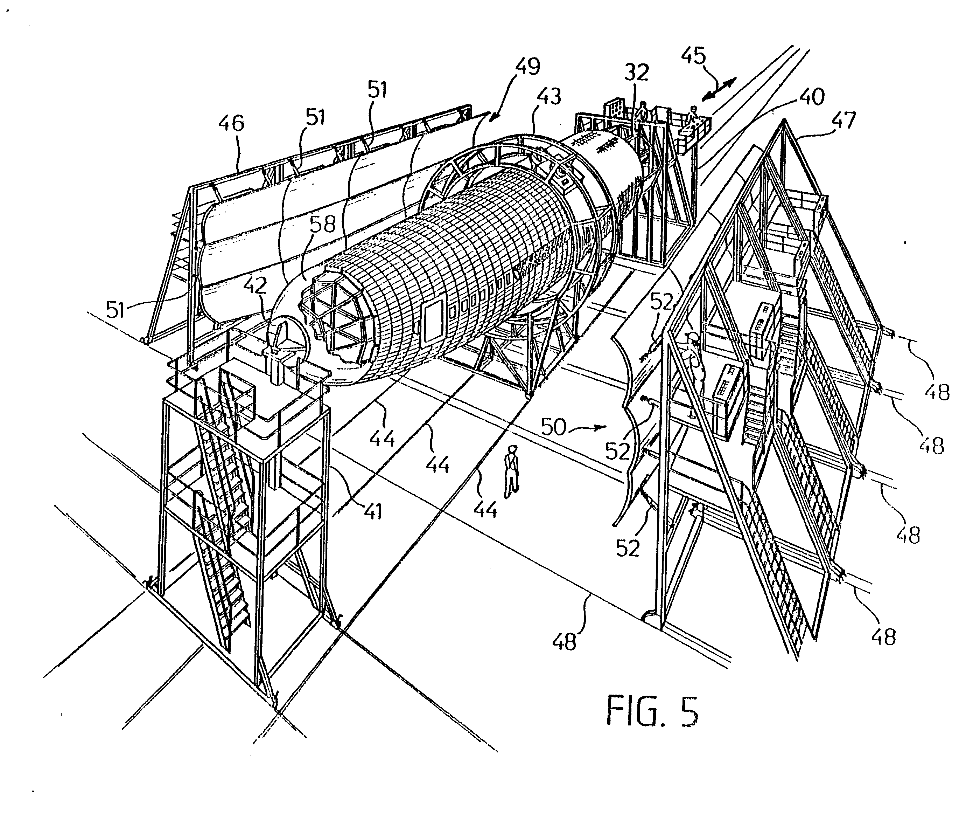

Fig. 5 zeigt eine Gesamtansicht einer Vorrichtung zur Herstellung eines Flächenbauteils für Flugzeugrümpfe mit einem Trag-Gerüst 40 für den Dorn 32. Hieran ist der Dorn 32 mit dem den großen Durchmesser aufweisenden Ende biegesteif angeschlossen. Im Vordergrund befindet sich ein Gestell 41 zum Abstützen des anderen Endes des Dornes 32. Hier ist der Dorn lösbar mit einer entsprechenden Halterung 42 verbunden. Eine Bandagiereinrichtung 43 ist wie das Gerüst 40 auf Schienen 44 in Richtung des Pfeiles 45 verfahrbar. Weiterhin sind Halteeinrichtungen 46 und 47 vorgesehen, die auf Schienen 48 in Querrichtung verfahrbar sind und beheizbare Formschalen 49 und 50 tragen. Diese Schalen 49, 50 sind je Halteeinrichtung 46, 47 in zwölf einzelne Teilschalen unterteilt, die mittels ansteuerbarer Hydraulikzylinder 51, 52 in vorbestimmte Positionen verfahrbar und in Umfangsrichtung miteinander verriegelbar ausgeführt sind. Bei dem gezeigten Bauteil handelt es sich um eine in Umfangsrichtung geschlossene Sektion eines Flugzeugrumpfes. Die Herstellung eines derartigen Bauteils geschieht etwa durch folgenden Ablauf der einzelnen Arbeitsgänge :

a) Bandagieren der Formkörper 1 ;

b) Anbringen der bandagierten Formkörper 1 an den zu einem Ring 36 gehörenden und noch in Rüstposition befindlichen Trägerplatten 23 ;

c) Herunterfahren der Formkörper 1 dieses Ringes in die Formposition 26. Dabei schließt sich jeder ursprünglich zwischen den Bandagen der einzelnen Formkörper 1 befindliche Spalt und die Prepreg-Lagen werden in Umfangsrichtung fest aufeinandergepreßt ;

d) Anbringen von weiteren bandagierten Formkörpern 1 an den Trägerplatten 23 des nächsten Ringes 36 ;

e) Herunterfahren der Formkörper 1 dieses zweiten Ringes 36 auf Formposition. Dabei besteht zwischen den axial benachbarten Flächen der Bandagen des ersten Ringes und den betreffenden Flächen des zweiten Ringes der vorbeschriebene Spalt von der Breite BSL nach Fig. 3 ;

f) Einlegen der Spantsegmente 28 gemäß Fig. 3 ;

g) Heranfahren des zweiten Ringes 36 bis an den ersten Ring bis auf ein vorbestimmtes Maß ;

h) Anbringen der Formkörper 1 an den Trägerplatten 23 des dritten Ringes 36, nachdem dieser Ring in Rüstposition gebracht wurde ;

i) Herunterfahren der Formkörper 1 des dritten Ringes 36 auf Formposition ;

j) Einlegen der Spantsegmente 28 usf., bis sich alle Ringe 36 in Formposition befinden ;

k) Bandagieren des Rumpfes mit Prepreg-Bändern mittels der Bandagiereinrichtung 43 zur Herstellung der Außenhaut. Hierzu wird mindestens eine das Prepreg-Band abgebende Vorratsspule innerhalb der Einrichtung 43 um das feststehende Bauteil in einer Schraubenbewegung herumgeführt ;

l) Heranfahren und Anpressen der Formschalen 49, 50 an das Bauteil ;

m) Herunterfahren der Trägerplatten 23 auf Ausfahrposition 27 gem. Fig. 2. Hierzu werden alle Befestigungen zwischen den Formkörpern 1 und den Trägerplatten 23 durch Druckluftzufuhr zentral entriegelt ;

n) Herausfahren des Dorns 32 mit den Trägerplatten 23 aus dem Bauteil, nachdem der Dorn 32 von der Halterung 42 gelöst wurde. Dabei bleiben die Formkörper 1 infolge der radial nach innen gerichteten Druckkraft der Formschalen 49 und 50 in ihrer Position ;

o) Einlegen und Andrücken von Verstärkungsbändern 56 für die Gurte der Stringer 20 ;

p) Einlegen von z. B. aus Gummi bestehenden Abdecktüchern ;

q) Auspumpen der zwischen den Innenflächen der Formkörper 1 und den Tüchern befindlichen Luft ;

r) Aufheizen der Formschalen 49 und 50 ;

s) Einleiten von Druckluft in den durch die Tücher eingeschlossenen Hohlraum ;

t) Aushärten des Bauteils nach Vorschrift des Prepreg-Herstellers ;

u) Abkühlen und Entspannen ;

v) Entformen.

Die ihrerseits aus Faserverbundmaterial bestehenden Formschalen 49 und 50 entsprechend Fig. 5 bestimmen die Außenform des Rumpfes. Sie nehmen während des Aushärtens die aus dem Innendruck resultierenden Kräfte auf und sind daher in Umfangsrichtung fest miteinander versiegelt. Aufgrund des Faserverbundwerkstoffs ergibt sich in Verbindung mit den starren Verriegelungen eine sehr steife Auslegung der Schalen 49 und 50. Hierdurch wird erreicht, daß sich der Außendurchmesser des Bauteils infolge des Innendruckes und der Erwärmung praktisch nicht verändert. In axialer Richtung wird der durch die Schalen 49 und 50 gebildete Hohlraum durch zwei dicht schließende mit den Schalen 49 und 50 verbindbare Druckdeckel abgeschlossen, wovon der vordere Druckdeckel 58 in Fig. 5 sichtbar ist. Somit bildet die Vorrichtung selbst das für die Aushärtung erforderliche Druckgefäß (Autoklav).

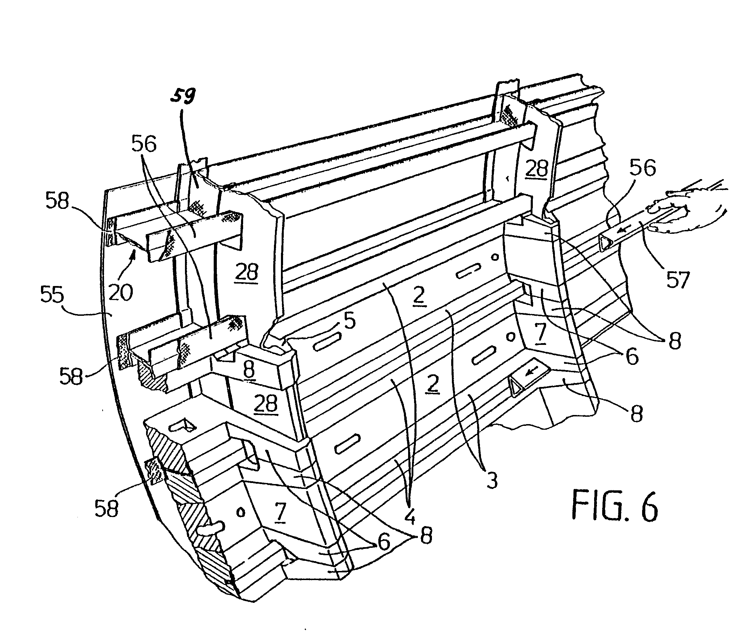

Fig. 6 zeigt einen Ausschnitt der Bauvorrichtung mit den vorbeschriebenen Elementen der Formkörper 1 in Formposition. Die Vorrichtung ist nach dem Ausfahren des Dornes 32 dargestellt. In diesem Zustand sind die Innenflächen der Formkörper 1 zugänglich. Die Außenhaut 55 ist bandagiert und die hier nicht gezeigten Formschalen 49 und 50 sind angelegt. Jetzt werden die mit 56 bezeichneten Prepreg-Bänder zur Bildung der inneren Stringergurte 22a eingelegt und angedrückt. Zur Erleichterung dieser manuellen Tätigkeit sind die Bänder 56 auf Stützprofilen 57 befestigt. Die Bänder 56 können aus einer oder mehreren Prepreg-Lagen bestehen. Wenn alle Bänder 56 eingelegt sind, werden die Innenflächen der Formkörper 1 sowie die Stützprofile 57 mit großflächigen Gummitüchern derart abgedeckt, daß diese eine bei Druckluftzufuhr direkt schließende Blase im Innern des Bauteils bilden. Hierdurch werden alle zu verbindenden Teile und Schichten einer durch die Druckluft steuerbaren Anpreßkraft ausgesetzt. Durch das vorherige Absaugen der zwischen den Gummitüchern und der Außenhaut befindlichen Luft wird Blasenbildung insbesondere zwischen den Prepreg-Lagen weitgehend vermieden. Die Aushärtebedingungen entsprechen den Vorschriften des Werkstoffherstellers. Üblicherweise wird bei einer Temperatur von ca. 125 °C und einem Druck von ca 7 bar ausgehärtet. Dabei beträgt die Aushärtezeit je nach Bauteildicke 3 bis 5 h. Nach dem Aushärten wird die Temperatur der Vorrichtung mit vorgegebener Abkühlgeschwindigkeit reduziert und der Innenraum der Vorrichtung wieder auf Umgebungsdruck gebracht. Danach wird das Bauteil entformt. Hierzu werden zunächst die Druckdeckel und die Gummitücher entfernt. Dann werden die Formkörper 1 vom Bauteil gelöst. Hierzu werden die Spantstützen 5 und die Mittelteile 2 entfernt. Danach können die Seitenteile 3 und 4 entfernt werden, indem diese zunächst in Umfangsrichtung von dem jeweiligen Stringer gelöst und dann radial nach innen abgenommen werden. Im oberen Teil der Fig. 6 erscheint das entformte Bauteil mit der Außenhaut 55, den Stringern 20 und den Spantsegmenten 28. Bei der gezeigten Ausführung sind die Spantsegmente — und damit auch die Spante — etwa doppelt so hoch wie die Stringer 20. Die Höhe der Spante kann etwa das 1,5 bis 6-fache der Stringerhöhe betragen. Nachdem das Bauteil an dessen Enden durch einen Kran gesichert ist, werden die Formschalen 49 und 50 entfernt und die weiteren Arbeitsgänge schließen sich an.

Zur späteren Aufnahme von Kräften, die in die Außenhaut des Flugzeugrumpfes eingeleitet werden, ist die Außenhaut an den betreffenden Stellen durch zusätzlich aufgelegte Faserschichten verstärkt. Die entsprechenden Zuschnitte werden hierzu vor dem Bandagieren der Außenhaut in dafür vorgesehene Ausnehmungen der Formkörper eingelegt. Derartige Verstärkungen sind auch an den Rändern von Fenster-, Türöffnungen etc. angebracht. Diese Öffnungen selbst werden vorteilhaft nach dem Aushärten des Bauteils eingearbeitet.

Eine Ausgestaltung des Verfahrens besteht darin, daß auf die äußeren Flansche der Stringer 20 Längsgurte aufgelegt und angepreßt werden, bevor die Außenhaut 55 bandagiert wird. Diese Längsgurte sind in Fig. 6 mit 58 bezeichnet.

Weitere Ausgestaltungen des Verfahrens ergeben sich dadurch, daß die Bänder, aus denen die Außenhaut 55 besteht, als einzelne überlappende Ringe mit der Steigung Null oder als überlappende Längsstreifen aufgebracht werden. Es ist auch denkbar, daß diese beiden Schichtungsarten miteinander kombiniert werden.

Eine weitere Ausgestaltung des Verfahrens besteht darin, daß beim Bandagieren der Außenhaut die Vorrichtung mit den Formkörpern um ihre Längsachse gedreht wird, wobei das Bandmaterial einer axial geführten Vorratsspule entnommen wird. Dieses Vorgehen ist bei kleineren Flugzeugrümpfen vorteilhaft, wenn der Aufwand für Fertigungsmittel relativ niedrig gehalten werden soll.

Trotz der Vorteile einer nahtlosen Formgebung des Rumpfes kann es unter bestimmten Umständen zweckmäßig sein, den gesamten Rumpf oder eine Sektion unter weitgehender Beibehaltung aller anderen Merkmale des Bauteils in Form zweier Halbschalen herzustellen, die später miteinander verbunden werden.

**Patentansprüche**

1. Gekrümmtes Flächenbauteil, insbesondere für Rümpfe von Luftfahrzeugen, mit aus faserverstärktem Kunststoff bestehenden längs verlaufenden Stringern (20) und quer verlaufenden Spanten (59), wobei diese Bauteile ein Gitter bilden und mit mindestens einer aus faserverstärktem Kunststoff bestehenden Beplankung (55) versehen sind, wobei ferner Stringer- und Spanten elemente vor der Zusammenfügung des Gitters als Rahmen im Bandagierverfahren hergestellt sind und die Seitenteile des Rahmens die Stringer- und Spantenelemente bilden, dadurch gekennzeichnet, daß in den Spanten zusätzliche eingurtige, aus faserverstärktem Kunststoff bestehende Spantsegmente (28) vorgesehen sind, deren Höhe ein Mehrfaches der Höhe der Stringer (20) beträgt und die vor Zusammenfügung des Flächenbauteils zwischen die Spantelemente des Gitters eingelegt werden.

2. Flächenbauteil nach Anspruch 1, dadurch gekennzeichnet, daß die Stringer (20) mittels auf die inneren Stringergurte (22a) aufgeklebte Bänder (56) aus faserverstärktem Kunststoff verstärkt sind.

3. Flächenbauteil nach Anspruch 1 oder 2, dadurch gekennzeichnet, daß die Außenhaut (55) eine nahtlose zylinder- oder kegelähnliche Form aufweist.

4. Flächenbauteil nach Anspruch 3, dadurch gekennzeichnet, daß die Außenhaut (55) aus mindestens einem schraubenförmig umlaufenden, aus faserverstärktem Kunststoff bestehenden Band gebildet ist.

5. Flächenbauteil nach Anspruch 3, dadurch gekennzeichnet, daß die Außenhaut (55) aus in Längsrichtung überlappend verlaufenden, aus faserverstärktem Kunststoff bestehenden Bändern gebildet ist.

6. Flächenbauteil nach einem der Ansprüche 1 bis 5, dadurch gekennzeichnet, daß die Außenhaut (55) in der Umgebung von Durchbrüchen durch weitere Lagen aus faserverstärktem Kunststoff verstärkt ist.

7. Vorrichtung zur Herstellung eines gekrümmten Flächenbauteils, insbesondere für Rümpfe von Luftfahrzeugen mit einem aus längs verlaufenden Stringern (20) und quer verlaufenden Spanten (59) gebildeten Gitter, das mit mindestens einer Beplankung versehen ist, wobei das ·Gitter aus Rahmen zusammengesetzt ist, die im Bandagierverfahren hergestellt sind und deren Seitenteile Strinˈger- und Spantenelemente (21, 59) bilden, wobei eine Vielzahl von in der Grundform annähernd quaderförmigen mehrfach teilbaren Formkörpern zum Formen des Gitters vorgesehen ist, dadurch gekennzeichnet, daß jeweils eine Gruppe von Formkörpern (1) über Trägerplatten (23) sowie Radialantriebe (Hydraulikzylinder 24) und Radialführungen (31) derart an dem Umfang eines Tragringes (36) angeordnet sind, daß die Formkörper (1) mittels der Radialantriebe (Hydraulikzylinder 24) in vorbestimmte Positionen radial verfahrbar sind und eine Mehrzahl von Tragringen (36) vorgesehen ist, die auf einem mit Längsschienen (35) versehenen Dorn (32) axial verfahrbar sind, so daß die Gesamtheit der Formkörper (1) eine zusammenhängende rohrartig gekrümmte Fläche bilden können.

8. Vorrichtung nach Anspruch 7, gekennzeichnet durch dicht schließende Druckdeckel (58).

9. Vorrichtung nach Anspruch 8, gekennzeichnet durch ein Traggerüst (40) woran der Dorn (32) biegesteif angeschlossen ist.

10. Vorrichtung nach Anspruch 9, gekennzeichnet durch Schienen (44) auf denen das Traggerüst (40) verfahrbar ist.

11. Vorrichtung nach Anspruch 10, gekennzeichnet durch ein Gestell (41) zum Abstützen des freien Endes des Dorns (32).

12. Vorrichtung nach Anspruch 11, gekennzeichnet durch aufheizbare Formschalen (49, 50), die durch Betätigungselemente (Hydraulikzylinder 51, 52) in vorbestimmte Positionen bringbar und von auf Schienen (48) verfahrbaren Halteeinrichtungen (47, 49) getragen sind.

13. Vorrichtung nach Anspruch 12, dadurch gekennzeichnet, daß die Formschalen (49, 50) in Umfangsrichtung miteinander verriegelbar ausgeführt sind.

**Claims**

1. A curved surface-type structural member, in particular for aircraft fuselages, with longitudinally extending stringers (20) consisting of fiber-reinforced plastic material and transversally extending frames (59), in which member these components form a lattice and are provided with at least one skin panel (55) consisting of plastic material, in which member, furthermore, stringer and frame elements are produced by the swathing process prior to the lattice being joined together to form a frame, and in which member the lateral sections of the frame form the stringer and frame elements, characterized in that, inside the frames, additional single-web frame segments (28) consisting of fiber-reinforced plastic material are provided whose height is a multiple of the height of the stringers (20) and which are inserted between the frame elements of the lattice prior to the surface-type structural member being joined together.

2. A surface-type structural member as claimed in Claim 1, characterized in that the stringers (20) are reinforced by means of tapes (56) of fiber-reinforced plastic material bonded onto the inner stringer webs (22a).

3. A surface-type structural member as claimed in Claim 1 or 2, characterized in that the outer skin (55) exhibits a seamless cylinder or cone-like shape.

4. A surface-type structural member as claimed in Claim 3, characterized in that the outer skin (55) is formed of at least one spirally extending tape consisting of fiber-reinforced plastic material.

5. A surface-type structural member as claimed in Claim 3, characterized in that the outer skin (55) is, in the longitudinal direction, formed by overlappingly extending tapes consisting of fiber-reinforced plastic material.

6. A surface-type structural member as claimed in any of the Claims 1 thru 5, characterized in that the outer skin (55), within the proximity of the cutouts, is reinforced by further layers of fiber-reinforced plastic material.

7. An apparatus for producing a curved surface-type structural member, in particular for aircraft fuselages, with a lattice formed by longitudinally extending stringers (20) and transversally extending frames (59), which is provided with at least one skin panel, the lattice being composed of frames that are produced by the swathing method and the lateral sections of which form stringer and frame elements (21, 59), wherein is provided a plurality of, in their basic shape, approximately rectangular, multiply divisible forming elements for forming the lattice, characterized in that, in each case, a group of forming elements (1) is, via supporting plates (23) and radial drives (hydraulic cylinder 24) and radial guiding means (31), disposed on the periphery of an annular support (36) in such a manner that the forming elements (1) are radially displaceable into predetermined positions and in that a plurality of annular supports (36) is provided which are axially displaceable on a mandrel (32) fitted with longitudinal tracks (35) so that the forming elements (1) as a whole are capable of forming a continuous, tubularly curved surface.

8. An apparatus as claimed in Claim 7, characterized by tightly closing pressure covers (58).

9. An apparatus as claimed in Claim 8, characterized by a supporting frame (40) to which the mandrel (32) is rigidly connected.

10. An apparatus as claimed in Claim 9, characterized by tracks (44) on which the supporting frame can be moved.

11. An apparatus as claimed in Claim 10, characterized by a structure (41) for supporting the free end of the mandrel (32).

12. An apparatus as claimed in Claim 1, characterized by heatable mold shells (49, 50) which, by means of actuating elements (hydraulic cylinders 51, 52) can be moved into predetermined positions and which are borne by retaining devices (47, 49) that are displaceable on tracks (48).

13. An apparatus as claimed in Claim 12, characterized in that the mold shells (49, 50) are constructed so as to be interlockable in the circumferential direction.

**Revendications**

1. Elément de structure incurvé, en particulier pour des fuselages d'aéronefs, comprenant des lisses (20) longitudinales et des couples (59) transversaux, ces éléments étant constitués de matière plastique renforcée de fibres, formant une grille et étant munis d'au moins un revêtement (55) constitué de matière plastique renforcée de fibres, les éléments de lisses et de couples étant, avant l'assemblage de la grille, fabriqués en tant que cadre suivant le procédé de rubanage et les parties latérales du cadre constituant les éléments de lisses et de couples, caractérisés par le fait que dans les couples sont prévus des segments de couples (28) supplémentaires, à une seule semelle, constitués de matière plastique renforcée de fibres, segments dont la hauteur s'élève à un multiple de la hauteur des lisses (20) et qui, avant l'assemblage de l'élément de structure, sont insérés entre les éléments de couples de la grille.

2. Elément de structure suivant la revendication 1, caractérisé par le fait que les lisses (20) sont renforcés par des bandes (56) de matière plastique renforcée de fibres, collées sur les semelles intérieures (22a) des lisses.

3. Elément de structure suivant la revendication 1 ou 2, caractérisé par le fait que le revêtement extérieur (55) présente une forme sensiblement cylindrique ou conique, sans joints.

4. Elément de structure suivant la revendication 3, caractérisé par le fait que le revêtement extérieur (55) est constitué par une bande de matière plastique renforcée de fibres, s'étendant en hélice.

5. Elément de structure suivant la revendication 3, caractérisé par le fait que le revêtement extérieur (55) est constitué par des bandes de matière plastique renforcée de fibres, s'étendant de manière à se chevaucher dans la direction longitudinale.

6. Elément de structure suivant l'une des revendications 1 à 5, caractérisé par le fait que le revêtement extérieur (55) est renforcé, dans la zone de traversées, par des couches supplémentaires de matière plastique renforcée de fibres.

7. Dispositif pour la fabrication d'un élément de structure incurvé, en particulier pour des fuselages d'aéronefs, comprenant une grille formée de lisses (20) longitudinales et de couple (59) transversaux et munie d'au moins un revêtement, la grille étant composée de cadres qui sont fabriqués suivant le procédé de rubanage et dont les parties latérales forment des éléments de lisses et de couples (21, 59), une multitude de corps de moule ayant une forme de base sensiblement parallélépipédique et susceptible d'être divisés de façon multiple étant prévus pour former la grille, caractérisé par le fait que des groupes de corps de moule (1) sont disposés, par l'intermédiaire de plaques de support (23) ainsi que de commandes radiales (cylindres hydrauliques 24) et de guidages radiaux (31), sur le pourtour d'un anneau porteur (36) de telle manière que les corps de moule (1) soient déplaçables radialement dans des positions prédéterminées à l'aide des commandes radiales (cylindres hydrauliques 24) et qu'une pluralité d'anneaux porteurs (36) est prévue, ces anneaux étant déplaçables axialement sur un mandrin (32) muni de rails longitudinaux (35), de manière que l'ensemble des corps de moule (1) puissent former une surface continue, incurvée à la manière d'un tube.

8. Dispositif suivant la revendication 7, caractérisé par des couvercles de pression (58) se joignant étroitement.

9. Dispositif suivant la revendication 8, caractérisé par une ossature porteuse (40) à laquelle le mandrin (32) est raccordé de façon rigide en flexion.

10. Dispositif suivant la revendication 9, caractérisé par des rails (44) sur lesquels l'ossature porteuse (40) est déplaçable.

11. Dispositif suivant la revendication 10, caractérisé par un bâti (41) pour soutenir l'extrémité libre du mandrin (32).

12. Dispositif suivant la revendication 11, caractérisé par des coquilles de moule (49, 50) susceptibles d'être chauffées, qui peuvent être amenées par des éléments d'actionnement (cylindres hydrauliques 51, 52) dans des positions prédéterminées et qui sont supportées par des dispositifs de maintien (47, 49) déplaçables sur des rails (48).

13. Dispositif suivant la revendication 12, caractérisé par le fait que les coquilles de moule (49, 50) sont verrouillables entre elles dans la direction circonférentielle.

FIG. 1a

FIG. 1b

0 142 697

FIG. 2

FIG. 3

0 142 697

FIG. 4

FIG. 5

FIG. 6

0 142 697